# EUROPEAN PATENT APPLICATION

(11) **EP 2 849 108 A1**
(43) Date of publication of application: **18.03.2015**
(21) Application number: 13787170.3
(22) Date of filing: 28.03.2013
(51) Int. Cl.: G06F 21/00, G06F 3/12

(54) **APPARATUS AND METHOD FOR SECURING PRINTING**

(30) Priority: 07.05.2012 KR 20120047859
(71) Applicant: Fasoo. Com Co., Ltd, Seoul 121-270 (KR)
(72) Inventor: KANG, Pil-Gu, Incheon 405-260 (KR); KIM, Kwang-Hoon, Seoul 157-203 (KR); YI, Nam-Su, Seoul 136-130 (KR)
(74) Representative: Grünecker, Kinkeldey, Stockmair & Schwanhäusser
(86) International application number: PCT/KR2013/002582
(87) International publication number: WO 2013/168893

(57) **Abstract**

Disclosed are an apparatus and a method for securing printing. The present invention performs a print security action with respect to outputted data in accordance with a printing policy, when a security pattern is included in the outputted data of an outputted product. According to the present invention, by performing the print security action with respect to the outputted data in accordance with the printing policy, when the security pattern is included in the outputted data, printing of personal information and similar which is included in the outputted data can be prevented.

## Description

### [Technical Field]

The present invention relates to a print security device and method, and more particularly, to an apparatus and method for performing a print security operation on output data according to a printing policy when a security pattern is included in the output data for a printout.

### [Background Art]

Recently, various kinds of works performed within individuals or enterprises are being computerized due to developments of a computer, and various kinds of data generated by the computer is stored in the computer or is stored in an extra storage medium. Further, according to supply of a printer, there is a trend in which a user confirming contents by printing an electronic document on paper is increasing. Accordingly, due to a printout of the electronic document in which personal information is included, there is a possibility that the personal information is released to the outside.

As one conventional art, there is a Korean Patent Application Publication No. 10-2011-0027031 (Samsung Electronics Co.) relating to an image forming apparatus, an image processing method, and an image forming system. This reference discloses technology of detecting a specific pattern in a scanned image, and encoding the detected specific pattern using a predetermined format.

Further, as another conventional art, there is a Korean Patent No. 10-0990269 (Hyundai Heavy Industries Co.). This reference relates to a security system and method by virtual separation of a personal computer network and a hard disk, and discloses technology of determining whether a document is to be printable or a water mark template is to be applicable with respect to a processor which is driven in a working area.

### [Disclosure]

### [Technical Problem]

The present invention is directed to providing a print security device and method capable of performing a print security operation on output data according to a printing policy when a security pattern is included in the output data for a printout.

The present invention is further directed to providing a computer-readable record medium storing a program for executing a print security method of performing a print security operation on output data according to a printing policy when a security pattern is included in the output data for a printout in a computer.

### [Technical Solution]

One aspect of the present invention provides a print security device, including: a pattern detection unit configured to detect a predetermined security pattern from output data for a printout in which a print is requested by a user terminal; and a print security unit configured to perform a print security operation on the output data according to a printing policy acquired from information of the security pattern detected by the pattern detection unit

Another aspect of the present invention provides a print security method, including: detecting a predetermined security pattern from output data for a printout in which a print is requested by a user terminal; and performing a print security operation on the output data according to a printing policy acquired from information of the detected security pattern.

### [Advantageous Effects]

According to a print security device and method, when a security pattern is included in output data for a printout, personal information, etc. included in the output data is prevented from being printed by performing a print security operation on the output data according to a printing policy. Further, the print security operation on the output data can be effectively performed by differently setting the printing policy according to a type of the detected security pattern and the number of the detected security patterns.

### [Description of Drawings]

FIG. 1 is a block diagram for describing a print security device according to one exemplary embodiment of the present invention;
FIG. 2 is a block diagram for describing a detailed construction of a print security device according to one exemplary embodiment of the present invention;
FIG. 3 is a flowchart for describing a print security method according to an exemplary embodiment of the present invention;
FIG. 4 is a block diagram for describing a print security device according to another exemplary embodiment of the present invention;
FIG. 5 is a block diagram for describing a print security device according to still another exemplary embodiment of the present invention; and
FIG. 6 is a block diagram for describing a print security device according to yet another exemplary embodiment of the present invention.

### [Modes of the Invention]

Hereinafter, a print security device and method according to embodiments of the present invention will be described below in more detail with reference to the accompanying drawings.

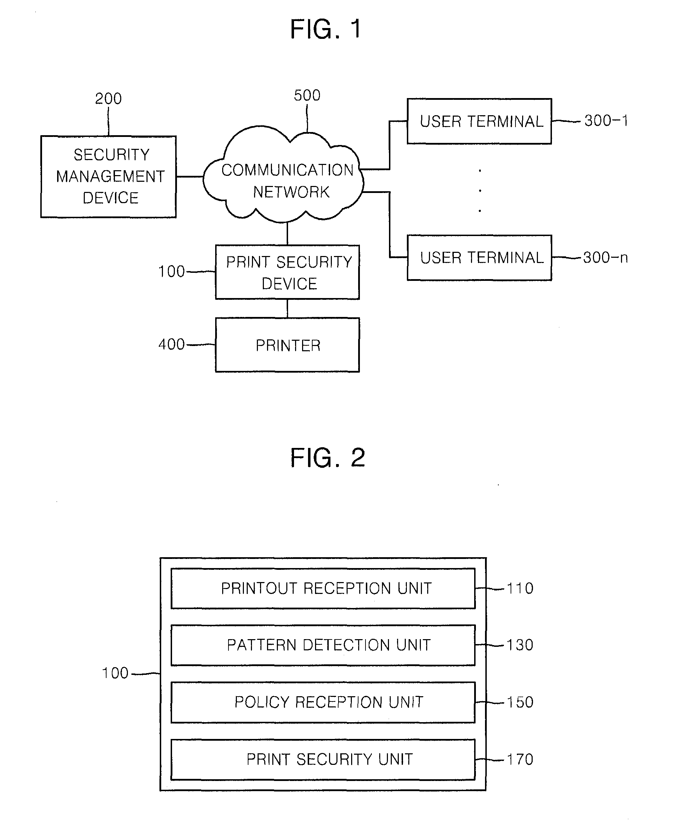

FIG. 1 is a block diagram for describing a print security device according to one exemplary embodiment of the present invention.

Referring to FIG. 1, a print security device 100 may be connected to a security management device 200 and a plurality of user terminals 300-1 to 300-n through a communication network 500. The print security device 100 may be directly connected to a printer 400.

When a predetermined security pattern is included in output data for a printout in which a print is requested by the user terminal, the print security device 100 may acquire a printing policy corresponding to a detected security pattern from a print security policy which is provided from the security management device 200, and perform a print security operation on the output data according to the acquired printing policy.

Here, the security pattern may be a pattern including at least one among letters, numbers, and symbols, and be desirably personal information, but is not limited thereto. Further, the security pattern may be previously set by a manager, or be provided from the security management device 200. For example, the security pattern may be a character composition pattern with respect to the personal information such as a social security number, a license number, an e-mail address, etc. shown in Table 1

**[Table 1]**

| Security Pattern Name | Security Pattern |
|---|---|
| Social Security Number | [0-9]{2}(0[1-9]\|1[0-2])(0[1-9]\|[1,2][0-9]\|3[0,1])(-\|\) [1-4]{1}[0-9]{6} |
| License Number | [0-9]{2}[A-Z]{1}[0-9]{1}[0-9A-Z]{1}[A-Z]{1}[0,1]{1} |
| e-mail Address | [0-9a-zA-Z]([-_\.]?[0-9a-zA-Z])*@[0-9a-zA-Z]([-_\.]?[0-9a-zA-Z])*\.[a-zA-Z]{2,4} |
| ··· | |

Further, the print security operation may be constituted by a combination of the following five security operations. A first security operation may be an operation of allowing/blocking a print of the output data. A second security operation may be an operation of changing contents of the detected security pattern. For example, the second security operation may be the operation of changing the contents of the security pattern into a predetermined character string ('*', etc.), or of changing the contents of the security pattern into a predetermined font or a character type. A third security operation may be an operation of requesting approval on a print of the output data to a predetermined management terminal. A fourth security operation may be an operation of providing information on the print of the output data to the management terminal. For example, the fourth security operation may be the operation of notifying a predetermined manager of information such as the contents of the output data, a print request time, etc. through an e-mail/SMS, etc. A fifth operation may be an operation of storing image/text log information on a predetermined page among total pages of the output data.

Further, the print security policy may include the print security operation and the security pattern mapped each other. For example, as shown the following Table 2, the print security operation and the security pattern is mapped with respect to each printing policy.

**[Table 2]**

| Printing Policy Name | Print Security Operation | Security Pattern Name | Threshold Value |
|---|---|---|---|
| Print Suspension #1 | Block a print of output data Store image log information with respect to total pages | Social Security Number | 10 |
| | Store text log information with respect to total pages | | |
| | Provide information with respect to a print of output data to a management terminal | | |
| Print Suspension #2 | Block a print of output data | E-mail Address | 10 |
| | Store image log information with respect to total pages | | |
| | Store a text log information with respect to total pages | | |
| | Provide information with respect to a print of output data to a management terminal | | |
| Pre-approval | Request approval on a print of output data to a management terminal | Social Security Number E-mail | 5 |
| | Store image log information with respect to total pages | | 5 |
| | Store text log information with respect to total pages | Address | |
| | Change contents of a security pattern (Change to '*') | | |
| Follow-up Management #1 | Allow a print of output data | Social Security Number | 1 |
| | Store image log information with respect to pages 1 to 3 | | |
| | Store text log information with respect to pages 1 to 3 | | |
| | Change contents of a security pattern (Change a character type) | | |
| Follow-up Management #2 | Allow a print of output data | E-mail Address | 1 |
| | Store image log information with respect to pages 1 to 3 | | |
| | Store text log information with respect to pages 1 to 3 | | |
| | Change contents of a security pattern (Change a character type) | | |
| ··· | | | |

The security management device 200 may provide the print security policy which is previously set by a manager to the print security device 100.

The user terminals 300-1 to 300-n may request a print on the output data for the printout according to a user's operation. The user terminals 300-1 to 300-n may be a television, a computer, a tablet personal computer (PC), a personal digital assistant (PDA), a portable multimedia player (PMP), a mobile phone, a smart phone, a navigation device, etc.

The printer 400 may be an output device for printing information which is processed by the computer in a form capable of being seen by human's eyes. The printer 400 may be a thermal transfer printer, an ink-jet printer, a laser printer, etc.

The communication network 500 may be a data communication network such as a local area network (LAN), a metropolitan area network (MAN), a wide area network (WAN), the Internet, etc., and also include a broadcast network, a telephone network, etc. Further, the communication network 500 may be a wired or wireless network, and include every communication method.

FIG. 2 is a block diagram for describing a detailed construction of a print security device according to one exemplary embodiment of the present invention.

Referring to FIG. 2, the print security device 100 may include a printout reception unit 110, a pattern detection unit 130, a policy reception unit 150, and a print security unit 170.

The printout reception unit 110 may receive output data in which a print is requested by the user terminal 300-1.

The pattern detection unit 130 may detect a predetermined security pattern in the output data received from the printout reception unit 110. For example, the pattern detection unit 130 may confirm whether the predetermined security pattern (the social security number, the license number, the e-mail address, etc.) as shown in Table 1 is included in the output data.

The policy reception unit 150 may receive the print security policy as shown in Table 2 from the security management device 200.

The print security unit 170 may perform a print security operation on the output data received from the printout reception unit 110 according to the printing policy acquired from the information of the security pattern detected by the pattern detection unit 130. That is, the print security unit 170 may acquire the printing policy corresponding to the security pattern detected based on a type of the detected security pattern and the number of the detected security patterns from the print security policy received through the policy reception unit 150. Further, the print security unit 170 may perform the print security operation on the output data according to the acquired printing policy.

For example, when 13 social security numbers are detected as the security patterns from the output data, the print security unit 170 may block a print of the output data, store image/text log information with respect to total pages, and provide print information of the output data to the management terminal, according to the 'print suspension #1' of the printing policy. Meanwhile, when 8 social security numbers and 5 e-mail addresses are detected as the security patterns from the output data, the print security unit 170 may request approval on a print of the output data to the management terminal, store image/text information with respect to total pages, and change the contents of the security pattern into '*', according to the 'pre-approval' of the printing policy. On the other hand, when 3 social security numbers are detected as the security patterns from the output data, the print security unit 170 may allow a print of the output data, store image/text log information with respect to pages 1 to 3, and change the contents of the security pattern into a predetermined character type (change a character into a red color and a bold type), according to the 'follow-up management #1' of the printing policy.

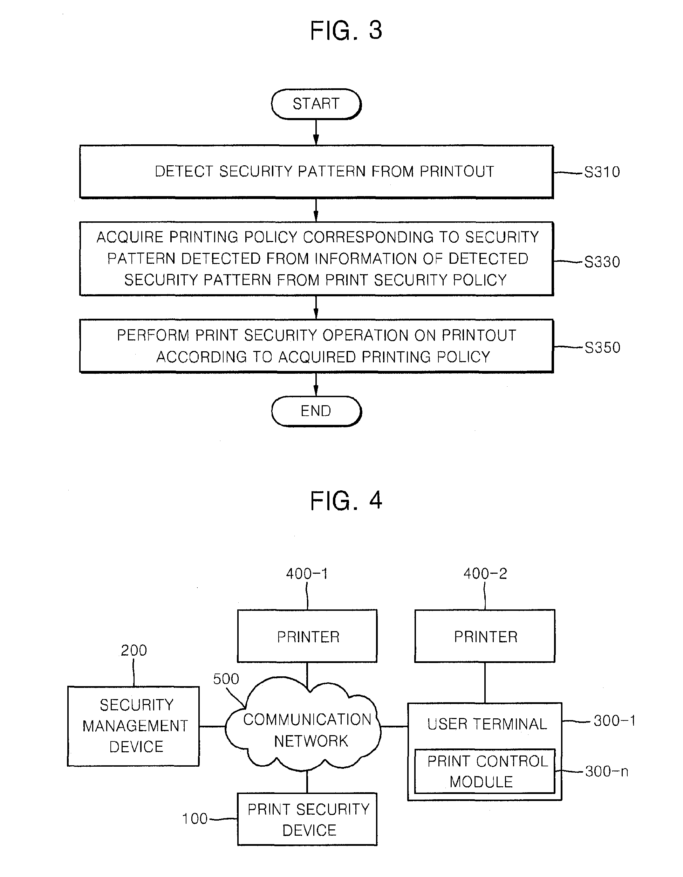

FIG. 3 is a flowchart for describing a print security method according to an exemplary embodiment of the present invention.

The print security device 100 may detect a security pattern from output data for a printout (S310). When the security pattern is detected, the print security device 100 may acquire a printing policy corresponding to the security pattern detected from information of the detected security pattern from a print security policy (S330). That is, the print security device 100 may acquire the printing policy corresponding to the detected security pattern according to a type of the detected security pattern and the number of the detected security patterns from the print security policy. Next, the print security device 100 may perform a print security operation on the output data according to the acquired printing policy (S350).

FIG. 4 is a block diagram for describing a print security device according to another exemplary embodiment of the present invention.

Since a print security device (100 of FIG. 4) according to another exemplary embodiment of the present invention substantially is equal to the print security device (100 of FIG. 1) according to one exemplary embodiment thereof, detailed descriptions will be omitted and only different portions will be described.

The print security device (100 of FIG. 1) according to one exemplary embodiment of the present invention may be located between the user terminal (300-1 of FIG. 1) and the printer (400 of FIG. 1), and receive the output data transmitted from the user terminal (300-1 of FIG. 1) to the printer (400 of FIG. 1), but the print security device (100 of FIG. 4) according to another exemplary embodiment of the present invention may be independently located from the printers (400-1 and 400-2 of FIG. 4), and receive output data transmitted from the user terminal (300-1 of FIG. 4) to the printers (400-1 and 400-2 of FIG. 4) through a print control module (310 of FIG. 4) installed in the user terminal (300-1 of FIG. 4).

That is, the print control module (310 of FIG. 4) may be implemented by software such as an application and installed in the user terminal (300-1 of FIG. 4), or may be implemented by hardware such as a chip, etc. and installed in the user terminal (300-1 of FIG. 4). The print control module (310 of FIG. 4) may provide the output data transmitted to the printer (400-1 or 400-2 of FIG. 4) by the user's operation to the print security device 100. Further, the print control module (310 of FIG. 4) may transmit the output data to the printer (400-1 or 400-2 of FIG. 4), or prevent the output data from being transmitted to the printer (400-1 or 400-2 of FIG. 4), according to the control of the print security device (100 of FIG. 4).

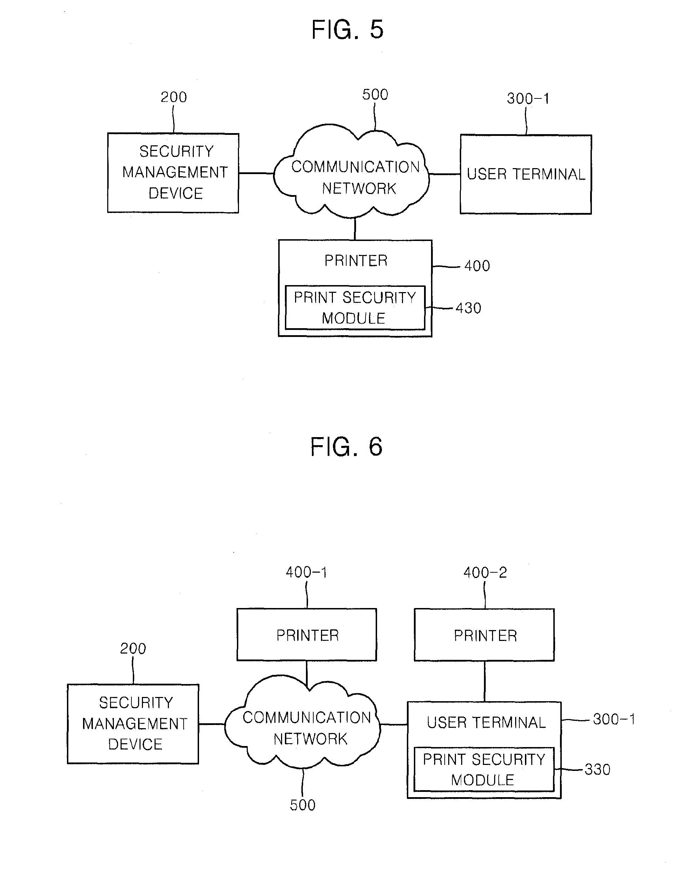

FIG. 5 is a block diagram for describing a print security device according to still another exemplary embodiment of the present invention.

Since a print security module (430 of FIG. 5) according to still another exemplary embodiment of the present invention is substantially equal to the print security device (100 of FIG. 1) according to one exemplary embodiment, detailed descriptions will be omitted and only different portions will be described.

The print security device (100 of FIG. 1) according to one exemplary embodiment may be a device which is independent from the printer (400 of FIG. 1), but the print security module (430 of FIG. 5) according to still another exemplary embodiment of the present invention may be implemented by software such as an application and installed in the printer (400 of FIG. 5), or may be implemented by hardware such as a chip, etc. and installed in the printer (400 of FIG. 5).

That is, the print security module (430 of FIG. 5) may detect the security pattern from the output data transmitted from the user terminal (300-1 of FIG. 5) to the printer (400 of FIG. 5). The print security module (430 of FIG. 5) may acquire the printing policy corresponding to the security pattern detected from the information of the detected security pattern from the print security policy. The print security module (430 of FIG. 5) may perform a print security operation on the output data according to the acquired print security policy.

FIG. 6 is a block diagram for describing a print security device according to yet another exemplary embodiment of the present invention.

Since a print security module (330 of FIG. 6) according to yet another exemplary embodiment of the present invention is substantially equal to the print security module (430 of FIG. 5) according to still another exemplary embodiment of the present invention, detailed descriptions will be omitted and only different portions will be described.

The print security module (430 of FIG. 5) according to still another exemplary embodiment of the present invention may be installed in the printer (400 of FIG. 5), but print security module (330 of FIG. 6) according to yet another exemplary embodiment of the present invention may be implemented by software such as an application and installed in the user terminal (300-1 of FIG. 6), or may be implemented by hardware such as a chip, etc. and installed in the user terminal (300-1 of FIG. 6).

The present invention may be implemented as computer-readable codes in a computer-readable record medium. The computer-readable record medium may include all types of record media in which computer-readable data is stored. Examples of the computer-readable record medium may include a ROM, a RAM, a CD-ROM, a magnetic tape, a floppy disk, an optical data storage, etc. Further, the record medium may be implemented in the form of a carrier wave (transmission through the Internet). In addition, the computer-readable record medium may be distributed to computer systems over a network, in which computer-readable codes may be stored and executed in a distributed manner.

While the invention has been shown and described with reference to certain exemplary embodiments thereof, it will be understood by those skilled in the art that various changes in form and details may be made therein without departing from the spirit and scope of the invention as defined by the appended claims.

## Claims

1. A print security device, comprising:
a pattern detection unit configured to detect a predetermined security pattern from output data for a printout in which a print is requested by a user terminal; and
a print security unit configured to perform a print security operation on the output data according to a printing policy acquired from information of the security pattern detected by the pattern detection unit.

2. The print security device according to claim 1, wherein the print security operation comprises at least one of an operation of blocking a print of the output data, an operation of changing contents of the detected security pattern, an operation of requesting approval on the print of the output data to a predetermined management terminal, an operation of providing information of the print of the output data to the management terminal, and an operation of storing log information with respect to a predetermined page among total pages of the output data.

3. The print security device according to claim 1, wherein the printing policy is acquired from a print security policy in which the print security operation and information of the security pattern are mapped with respect to each printing policy.

4. The print security device according to claim 3, wherein the print security unit receives the print security policy from a security management device.

5. The print security device according to claim 1, wherein the security pattern comprises at least one of characters, numbers, and symbols.

6. A print security method, comprising:
detecting a predetermined security pattern from output data for a printout in which a print is requested by a user terminal; and
performing a print security operation on the output data according to a printing policy acquired from information of the detected security pattern.

7. The print security method according to claim 6, wherein the print security operation comprises at least one of an operation of blocking a print of the output data, an operation of changing contents of the detected security pattern, an operation of requesting approval on the print of the output data to a predetermined management terminal, an operation of providing information of the print of the output data to the management terminal, and an operation of storing log information with respect to a predetermined page among total pages of the output data.

8. The print security method according to claim 6, wherein the printing policy is acquired from a print security policy in which the print security operation and information of the security pattern are mapped with respect to each printing policy.

9. The print security method according to claim 8, wherein the print security policy is provided from a security management device.

10. The print security method according to claim 6, wherein the security pattern comprises at least one of characters, numbers, and symbols.
